(19) Europäisches Patentamt
European Patent Office
Office européen des brevets

(11) EP 4 613 479 A1

(12) EUROPEAN PATENT APPLICATION

(43) Date of publication:
10.09.2025 Bulletin 2025/37

(21) Application number: 24162405.5

(22) Date of filing: 08.03.2024

(51) International Patent Classification (IPC):
B32B 17/10 (2006.01)    B32B 27/30 (2006.01)

(52) Cooperative Patent Classification (CPC):
B32B 17/10; B32B 17/10036; B32B 17/10165;
B32B 17/10174; B32B 17/10761; B32B 27/30;
B32B 2255/00; B32B 2255/205; B32B 2307/7376

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Kuraray Europe GmbH
65795 Hattersheim (DE)

(72) Inventors:
• Beekhuizen, Jan Arndt
  53859 Niederkassel (DE)
• Frank, Michael
  55268 Nieder-Olm (DE)
• Haerth, Michael
  Leinach (DE)
• Schirra, Dominic
  Hofheim am Taunus (DE)

(74) Representative: Janßen, Christian Oliver
Kuraray Europe GmbH
Phillip-Reis-Straße 4
65795 Hattersheim (DE)

(54) POLYVINYL ACETAL FILMS WITH FUNCTIONALIZATION

(57)    The present invention relates functionalised polyvinyl acetal films with a high molecular weight and laminated glass comprising a such functionalised films sandwiched between two sheets of glass.

Figure 1

EP 4 613 479 A1

**Description**

The present invention relates to functionalised polyvinyl acetal films with a high molecular weight and laminated glass comprising such functionalised films sandwiched between two sheets of glass.

It is known to provide laminated glass with additional features like heat shielding or improved penetration resistance by embedding a thin, optional functionalised polymer film in the laminate. For this purpose, thin PET films are widely used since they have a high modulus of elasticity and good heat resistance and can be easily functionalised for example by CVD techniques, e.g. by sputtering in high vacuum.

In order to produce laminated glass sheets with heat-shielding properties, thin PET films coated in an IR-absorbing or IR-reflecting manner are embedded between a plurality of layers of plasticiser-containing polyvinyl acetal, which is the standard material for making interlayers for laminated glass. This system has the disadvantage that at least three film layers (1 × functionalised PET, 2 × PVB film) have to be used, since PET cannot be melted directly on a glass surface.

Thus, it would be preferable to directly functionalize polyvinyl butyral films (PVB).

However, functionalization of PVB films by sputtering techniques has the disadvantage that PVB films are much softer than PET films, especially when the PVB contains substantial amounts of plasticizer and at the rather high temperatures required for the sputtering processes.

To this end, US20150202846A1 discloses the use of non-plasticized PVB films for sputtering. While this might increase the stiffness of the films sufficiently at lower temperatures, the document also teaches that "*sputtering is controlled such that the polymer substrate temperature remains under about 100 °C during the deposition process, and more preferably remains under about 75° C.*"

From an economical perspective, it would be an advantage to use PVB films which need no or much less cooling during the sputtering process.

Thus, there is still a need for improved PVB films and processes for the sputtering onto PVB.

The present inventors have now surprisingly found that PVB films with a high molecular weight as expressed by a peak top molecular weight Mp of above 150,000 g/mol show a substantially improved stability in the sputtering process as compared to PVB films with a lower molecular weight. This stability is based on an improved storage modulus. It has surprisingly been found that the storage modulus is rather comparable at temperatures of 100 °C and lower (the temperatures suggested to be used for the sputtering process in the above-cited document of the prior art) but at temperatures employed in the sputtering process as well as during the lamination of the PVB films between two glass sheets, a dramatic improvement in the storage modulus can be observed with the inventive molecular weight.

The invention therefore relates to a polyvinyl acetal film A comprising a functional layer on at least one side of the film A, wherein the polyvinyl acetal in film A has a peak top molecular weight Mp of above 150,000 g/mol as measured by GPC in THF according to the method described below.

*Brief description of the drawings*

Figure 1 shows a plot of modulus versus temperature of the four examples

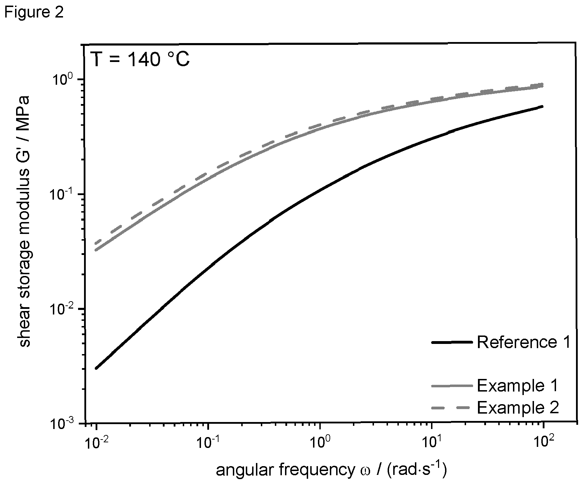

Figure 2 shows a plot of modulus versus frequency at 140 °C of three of the examples

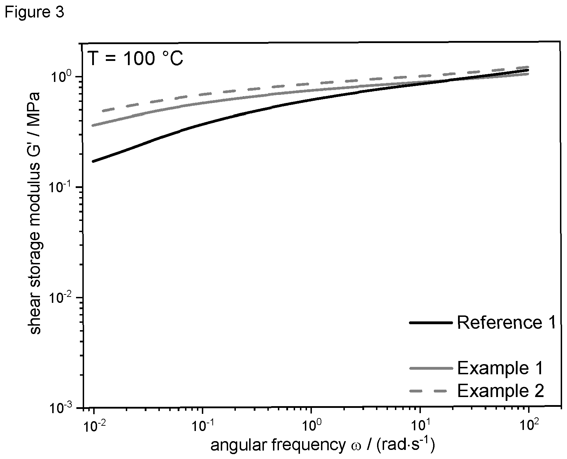

Figure 3 shows a plot of modulus versus frequency at 100 °C of three of the examples

Preferably, the peak top molecular weight Mp is above 160,000 g/mol, more preferably above 170,000 g/mol and even more preferably above 175,000 g/mol.

Also preferably, the peak top molecular weight Mp is below 250,000 g/mol, more preferably below 225,000 g/mol and even more preferably below 200,000 g/mol.

Also preferably, the peak top molecular weight Mp is between 150,000 g/mol and 250,000 g/mol and more preferably between 175,000 g/mol and 200,000 g/mol.

Preferably, the Mn is above 100,000 g/mol and also preferably below 150,000 g/mol.

Also preferably, Mw is above 200,000 g/mol, more preferably above 225,000 g/mol and even more preferably above 250,000 g/mol.

Also preferably, Mw is below 350,000 g/mol, more preferably below 325,000 g/mol and even more preferably below 300,000 g/mol.

Also preferably, Mw is between 200,000 g/mol and 300,000 g/mol and more preferably between 225,000 g/mol and 275,000 g/mol.

The thickness of film A is 10 - 350 $\mu$m, preferably 10 - 100 $\mu$m and more preferably 20 - 50 $\mu$m.

Films A used in accordance with the invention may contain less than 10 % by weight, less than 8 % by weight, less than 6 % by weight, less than 4 % by weight, less than 3 % by weight, less than 2 % by weight, less than 1 % by weight or even no plasticiser (0.0 % by weight).

The functional layer preferably contains heat-shielding particles, for example ITO, ATO, AZO, IZO, zinc antimonates, tin-doped zinc oxide, silicon-doped zinc oxide, gallium-doped zinc oxide, tungstates, such as LiWOs, NaWOs, CsWOs, lanthanum hexaboride or cerium hexaboride.

Preferred deposition methods for the functional layer are vapor deposition methods in vacuum. Vapor deposition is a family of processes that is used to deposit layers of atoms or molecules from the vapor phase onto a solid substrate in a vacuum chamber. Two types of processes used are sputtering and electron beam evaporation. More preferably, the sputtering method is used.

The process of sputtering can be achieved as described in the following with the examples of sputtering ITO onto a PVB film.

The PVB film is cleaned and prepared to ensure a clean and smooth surface for the deposition process. This may involve cleaning the film to remove any contaminants or residues that could affect the adhesion of the ITO layer.

The sputtering process takes place in a vacuum chamber. The PVB film is placed inside the chamber, and the chamber is evacuated to create a low-pressure environment.

The target ITO is mounted in the chamber, facing the PVB film. A process gas, often argon, is introduced into the chamber. The gas is ionized to create a plasma. The plasma generates energetic ions that will bombard the ITO target. The ITO target is bombarded by the energetic ions, causing atoms or molecules of ITO to be ejected from the target surface. This is the actual sputtering. The ejected ITO particles travel through the vacuum chamber and deposit onto the surface of the PVB film, forming a thin and uniform ITO layer. During the sputtering process, film thickness and other parameters are monitored to control the deposition and ensure the desired characteristics of the ITO layer. After deposition, the quality of the ITO layer is inspected to ensure it meets the required specifications, such as transparency and conductivity.

The resulting ITO-coated PVB film can be used in various applications, including as a transparent electrode in photovoltaic devices, flat-panel displays, touchscreens, and other electronic devices where transparent and conductive coatings are essential. The sputtering process provides a precise and controlled method for depositing thin films with specific properties onto substrates.

Another aspect of the present invention concerns a laminated glass comprising a stack of interlayer films comprising the polyvinyl acetal film A as describe herein and a polyvinyl acetal film B comprising plasticizer in a total amount of 16 to 60 % by mass based on a total mass of the resin composition sandwiched between two sheets of glass.

Such polyvinyl acetal films B, especially polyvinyl butyral films B are known in the art and can be obtained commercially, e.g. the Trosifol® product range available from Kuraray Europe GmbH.

Preferably, the functional layer on the at least one side of film A is facing the film B. In this orientation, the adhesion to the glass is not diminished by the functional layer and the functional layer is more protected before and during the lamination process.

Also preferably, the functional layer on the at least one side of the film A is provided with a coating or a film comprising polyvinyl butyral and/or polyurethane in order to improve the adhesion to the glass in case the functional layer is chosen to face the glass surface.

The films A and B may contain, in the starting state prior to lamination of the layers and also in the intermediate layer stack located in the laminated glass laminate, a single plasticiser as well as mixtures of plasticisers both of different and identical composition.

Plasticiser-containing films B used in accordance with the invention contain at least 16 % by weight, such as 16.1 - 36.0 % by weight, preferably 22.0 - 32.0 % by weight and in particular 26.0 - 30.0 % by weight plasticiser.

The thickness of a film B is 450 - 2500 $\mu$m, preferably 600 - 1000 $\mu$m, preferably 700 - 900 $\mu$m.

The films can contain polyvinyl acetals, each having a different polyvinyl alcohol content, degree of acetalisation, residual acetate content, ethylene proportion, molecular weight and/or different chain lengths of the aldehyde of the acetal groups.

The polyvinyl (n)acetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The films A or B preferably contain polyvinyl acetals having a proportion of polyvinyl acetate groups based on the layers, either identically or differently, of 0.1 to 20 mol %, preferably 0.5 to 3 mol %, or 5 to 8 mol %.

The polyvinyl alcohol content of the used polyvinyl acetals PA of film A having a lower plasticiser content in the starting state may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The polyvinyl alcohol content of the used polyvinyl acetals PB of film B, which is richer in plasticiser in the starting state, may be between 14 - 26 % by weight, 16 - 24 % by weight, 17 - 23 % by weight and preferably between 18 and 21 % by weight.

Films A and/or B used in accordance with the invention may contain, as plasticiser, one or more compounds selected from the following groups:

- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds such as di-2-butoxyethyladipat (DBEA) and di-2-butoxyethoxyethyladipat (DBEEA), dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Films A in the variants in which a plasticiser WA is present in film A in the starting state, and also films B particularly preferably contain 1,2-cyclohexane dicarboxylic acid diisononyl ester (DINCH) or triethylene glycol-bis-2-ethyl hexanoate (3GO or 3G8) as plasticiser.

In addition, films A and B may contain further additives, such as residual quantities of water, UV absorber, antioxidants, adhesion regulators, optical brighteners or fluorescent additives, stabilisers, colorants, processing aids, organic and inorganic nanoparticles, pyrogenic silicic acid and/or surface active substances. In particular, film B may comprise 0.001 to 0.1 % by weight of alkaline salts and/or alkaline earth salts of carboxylic acids as adhesion regulators.

In another embodiment, film A have a higher glass transition temperature Tg (measured by DSC) than film B. Accordingly, glass transition temperature Tg (measured by DSC) of film A is more than 5 °C, more than 10 °C or more than 15 °C higher than the glass transition temperature Tg (measured by DSC) of film B Preferable, film A has a glass transition temperature Tg (measured by DSC) higher than 25 °C, or higher than 30°C, or higher than 40 °C and most preferred higher than 50 °C.

To laminate the PVB films, the methods with which a person skilled in the art is familiar can be used with and without prior production of a pre-laminate.

What are known as autoclave processes are carried out at an increased pressure from approximately 10 to 15 bar and temperatures from 100 to 145 °C over approximately 2 hours. Vacuum bag or vacuum ring methods, for example according to EP 1 235 683 B1, function at approximately 200 mbar and 130 to 145 °C.

What are known as vacuum laminators can also be used. These consist of a chamber that can be heated and evacuated, in which laminated glazing can be laminated within 30 - 60 minutes. Reduced pressures from 0.01 to 300 mbar and temperatures from 100 to 200 °C, in particular 130 - 160 °C, have proven their worth in practice.

The thin films A are generally produced by extrusion with use of a cast-film line, by solvent casting or in the form of a blown film.

**Experimental Part**

*Example 1*

*Synthesis of polyvinyl butyral*

100 parts by weight of a polyvinyl alcohol with a viscosity of 50 mPas (4 w/w% in aqueous solution, measured according to DIN 53015 at 20 °C) and a degree of hydrolysis of 92.2 mol% were dissolved in 1200 parts by weight of water with heating to 90 °C. At a temperature of 40 °C, 50 parts by weight of n-butyraldehyde and at a temperature of 18 °C, 75 parts by weight of 20 w/w% hydrochloric acid were added with stirring. The mixture was heated to 40 °C. After the polyvinyl butyral (PVB) had precipitated, the mixture was stirred at this temperature for 48 hours. The PVB was separated after cooling to room temperature, washed with water to neutrality (pH = 7) and dried. A PVB with a polyvinyl alcohol content of 19.3 % by weight (28.3 mol%) and a polyvinyl acetate content of 9.4 % by weight (7.0 mol%) was obtained.

*Example 2*

*Synthesis of polyvinyl butyral*

100 parts by weight of a polyvinyl alcohol with a viscosity of 55 mPas (4 w/w% in aqueous solution, measured according to DIN 53015 at 20 °C) and a degree of hydrolysis of 98.3 mol% were dissolved in 1200 parts by weight of water with heating to 90 °C. At a temperature of 40 °C, 58 parts by weight of n-butyraldehyde and at a temperature of 20 °C, 75 parts by weight of 20 w/w% hydrochloric acid were added with stirring. The mixture was heated to 40 °C. After the polyvinyl butyral (PVB) had precipitated, the mixture was stirred at this temperature for 48 hours. The PVB was separated after cooling to room temperature, washed with water to neutrality (pH = 7) and dried. A PVB with a polyvinyl alcohol content of 19.2 % by weight (27.8 mol%) and a polyvinyl acetate content of 2.1 % by weight (1.5 mol%) was obtained.

*Reference Example 1*

*Synthesis of polyvinyl butyral*

100 parts by weight of a polyvinyl alcohol with a viscosity of 26 mPas (4 w/w % in aqueous solution, measured according to DIN 53015 at 20 °C) and a degree of hydrolysis of 99.0 mol% were dissolved in 1000 parts by weight of water with heating to 90 °C. At a temperature of 40 °C, 56 parts by weight of n-butyraldehyde and at a temperature of 12 °C, 100 parts by weight of 20 w/w% hydrochloric acid were added with stirring. The mixture was heated to 40 °C. After the polyvinyl butyral (PVB) had precipitated, the mixture was stirred at this temperature for 48 hours. The PVB was separated after cooling to room temperature, washed with water to neutrality (pH = 7) and dried. A PVB with a polyvinyl alcohol content of 19.3 % by weight (27.9 mol%) and a polyvinyl acetate content of 1.0 % by weight (0.7 mol%) was obtained. 100 parts by weight of a polyvinyl alcohol with a viscosity of 4 mPas (4 w/w % in aqueous solution, measured according to DIN 53015 at 20 °C) and a degree of hydrolysis of 98.5 mol % were dissolved in 1000 parts by weight of water with heating to 90 °C. At a temperature of 40 °C, 56 parts by weight of n-butyraldehyde and at a temperature of 4 °C, 100 parts by weight of 20 w/w % hydrochloric acid were added with stirring. The mixture was heated to 40 °C. After the polyvinyl butyral (PVB) had precipitated, the mixture was stirred at this temperature for 48 hours. The PVB was separated after cooling to room temperature, washed with water to neutrality (pH = 7) and dried. A PVB with a polyvinyl alcohol content of 19.3 % by weight (27.9 mol %) and a polyvinyl acetate content of 1.9 % by weight (1.4 mol %) was obtained. A mixture was prepared by using 55 parts by weight of the first polyvinyl butyral and 45 parts by weight of the second polyvinyl butyral.

Reference Example 2 is a commercially available polyvinyl butyral resin grade Mowital® B60H from Kuraray Europe GmbH.

<u>*Method to determine the molecular weight*</u>

Size exclusion chromatography was used to determine the molecular weight using the following conditions. THF was used as solvent for sample preparation and as eluent. The sample concentration was adjusted to 10 mg/mL by dissolving 50 mg PVB resin in 5 mL THF and shaking at 25 °C for 15 min. The injection volume used was 50 $\mu$L and the flow rate was set to 1 mL/min using an HPLC pump. The temperature used was set to 40°C. An SDV Guard (50 x 8 mm, 5$\mu$m particles) from PSS was used as a precolumn, followed by a combination of the following three columns: 1. PSS SDV 100 Å 300×8 mm (5 $\mu$m particles), 2. PSS SDV 1,000 Å 300×8 mm (5 $\mu$m particles), 3. PSS SDV 100,000 Å 300×8 mm (5$\mu$m particles). Detection was performed using an RI detector (RID; Agilent G7162A). A corresponding calibration curve was used to calculate the molecular weight of PVB resin based on various PMMA standards in the range of 2,200 to 2,700,000 g/mol.

The peak evaluation in the SEC measurements was conducted within the boundaries of 2.5% of the maximum normalized detector signal. The maximum detector value of a peak was set to 100% and integration was performed only up to 2.5% intensity on both sides of the signal. Consequently, the outer edges of the signal were truncated to ensure precise and reproducible evaluation.

<u>*Results of the Molecular Weight Measurements (in g/mol)*</u>

|  | abs. Mn | abs. Mw | Mw/Mn | Mp |
|---|---|---|---|---|
| Example 1 | 108,000 | 251,000 | 2.33 | 185,000 |
| Example 2 | 108,000 | 255,000 | 2.36 | 180,000 |
| Reference 1 | 44,000 | 140,000 | 3.19 | 89,800 |
| Reference 2 | 60,000 | 131,000 | 2.18 | 94,000 |

The following definitions are used throughout this specification:

Number average molecular weight (Mn): The number average molecular weight is the statistical average molecular weight of all the polymer chains in the sample, and is defined by:

$$Mn = \frac{\Sigma N_i M_i}{\Sigma N_i}$$

where Mi is the molecular weight of a chain and Ni is the number of chains of that molecular weight.

The weight average molecular weight is defined by:

$$Mw = \frac{\Sigma N_i M_i^2}{\Sigma N_i M_i}$$

Compared to Mn, Mw takes into account the molecular weight of a chain in determining contributions to the molecular weight average.

Mp is the molecular weight of the highest peak of the GPC curve.

*Preparation of film samples*

The film samples (test specimen) were prepared with a thickness of 100 $\mu$m by pressing the PVB powder samples produced in the examples mentioned above. A lab stack press from VOGT Labormaschinen GmbH was used for this purpose. The conditions were as follows: temperature of 200 °C and pressure of 200 bar for 30 min, followed by 20 min cooling time to room temperature at 200 bar.

*Measurement of the Storage Modulus G'*

The Storage Modulus G' as a function of temperature was measured using a MCR 302 rheometer (Anton Paar) and a plate/ plate geometry (diameter: 8 mm). The frequency was set to 1 Hz and the heating rate to 3 K/min. The measurements were performed in the linear range of deformation between 0°C and 180 °C.

Specimens with a diameter of 25 mm were used to measure the frequency dependency of the Storage Modulus G' at 100 and 140 °C. The measurements were performed in the linear range of deformation between 100 and 0.01 rad/s.

Prior to all measurements, the specimens were stored at 65 °C for 24 hours.

*Results*

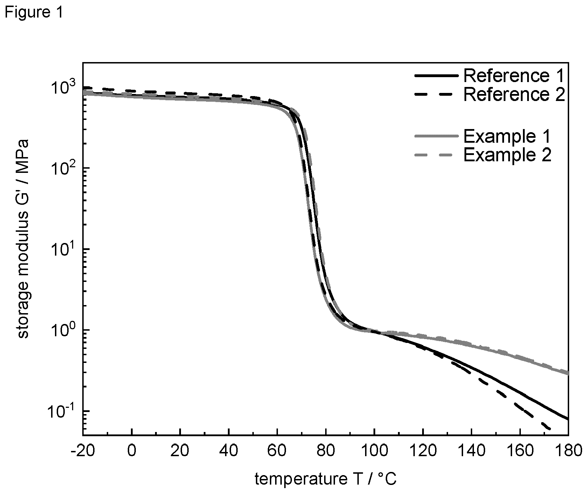

The two examples according to the invention show substantially improved G' in all experiments. Figure 1 shows that the G' of the inventive examples is very similar to the lower Mp reference sample until a temperature of 100 °C. At higher temperatures the curves separate and the inventive examples show much improved behaviour. This behaviour is confirmed by the results for the measurements performed at a constant temperature of 100 and 140 °C, respectively.

The result show that the inventive films are improved for use in functionalization processes, e.g. by CVD. Additionally, functionalisation like ultra-thin conductive wires on these films are much more likely to withstand the lamination conditions as used in the production of laminated glass since the inventive films are much less likely to deform in the lamination process.

**Claims**

1. A polyvinyl acetal film A comprising a functional layer on at least one side of the film A, wherein the polyvinyl acetal in film A has a peak top molecular weight Mp of above 150,000 g/mol as measured by GPC in THF according to the method described in the description.

2. The polyvinyl acetal film A according to claim 1 comprising plasticizer in a total amount of 0 to 10% by mass based on a total mass of the resin composition.

3. The polyvinyl acetal film A according to claim 1 or 2 wherein the polyvinyl acetal resin film A has a thickness of 10 to 350 $\mu$m.

4. The polyvinyl acetal film A according to any one of the claims above wherein the functional layer is a metallic heat-shielding coating, electrically conductive structure or transparent electrode.

5. The polyvinyl acetal film A according to any one of the claims above wherein the polyvinyl acetal in film A has the peak top molecular weight Mp of above 175,000 g/mol.

6. The polyvinyl acetal film A according to any one of the claims above wherein the polyvinyl acetal in film A has the peak top molecular weight Mp from 150,000 to 250,000 g/mol.

7. The polyvinyl acetal film A according to any one of the claims above wherein the polyvinyl acetal in film A has the peak top molecular weight Mp from 175,000 to 225,000 g/mol.

8. The polyvinyl acetal film A according to any one of the claims above wherein the functional layer comprises particles of silver, gold, indium, aluminium or rhodium, or an alloy or an oxide thereof, preferably silver particles and/or indium titanium oxide.

9. The polyvinyl acetal film A according to any one of the claims above wherein the functional layer is provided by a chemical vapour deposition process.

10. The polyvinyl acetal film A according to any one of the claims above wherein the chemical vapour deposition process is a process of sputtering particles of silver, gold, indium, aluminium or rhodium, or an alloy or an oxide thereof in high vacuum.

11. The polyvinyl acetal film A according to any one of the claims above wherein the polyvinyl acetal is polyvinyl butyral.

12. A laminated glass comprising a stack of interlayer films comprising the polyvinyl acetal film A according to any one of claims 1 to 11 and a polyvinyl acetal film B comprising plasticizer in a total amount of 16 to 60 % by mass based on a total mass of the resin composition sandwiched between two sheets of glass.

13. The laminated glass according to claim 12 wherein the functional layer on at least one side of film A is facing the film B.

14. The laminated glass according to claim 12 wherein the functional layer on at least one side of the film A is provided with a coating or a film comprising polyvinyl butyral and/or polyurethane.

Figure 1

Figure 2

Figure 3

Europäisches
Patentamt

European
Patent Office

Office européen
des brevets

# EUROPEAN SEARCH REPORT

**Application Number**

EP 24 16 2405

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/017675 A1 (ISOUE KOICHIRO [JP] ET AL) 16 January 2020 (2020-01-16)<br>* paragraphs [0001], [0043], [0044], [0064] - [0069], [0094], [0111] - [0122], [0126] - [0131], [0140], [0142], [0143] - [0150] *<br>* paragraphs [0156], [0164] - [0177], [0200] - [0206], [0209] - [0212], [0225] *<br>* tables 1,2 *<br>* claims 1-16 * | 1-14 | INV.<br>B32B17/10<br>B32B27/30 |
| A | US 2008/268270 A1 (CHEN WENJIE [US] ET AL) 30 October 2008 (2008-10-30)<br>* paragraphs [0001], [0010], [0015], [0019], [0034], [0042], [0053], [0070] *<br>* claims 1-19 * | 1-14 | |
| A | US 2023/332020 A1 (KELLER UWE [FR] ET AL) 19 October 2023 (2023-10-19)<br>* paragraphs [0001], [0011], [0014], [0041] - [0057], [0091] - [0101] *<br>* claims 1-15 * | 1-14 | **TECHNICAL FIELDS SEARCHED (IPC)**<br><br>B32B |

The present search report has been drawn up for all claims

| Place of search | Date of completion of the search | Examiner |
|---|---|---|
| The Hague | 11 July 2024 | Girard, Sarah |

EPO FORM 1503 03.82 (P04C01)

## ANNEX TO THE EUROPEAN SEARCH REPORT
## ON EUROPEAN PATENT APPLICATION NO.

EP 24 16 2405

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2024

| Patent document cited in search report | Publication date | Patent family member(s) | | Publication date |
|---|---|---|---|---|
| US 2020017675 A1 | 16-01-2020 | CN | 110494404 A | 22-11-2019 |
| | | EP | 3604254 A1 | 05-02-2020 |
| | | JP | 6487131 B2 | 20-03-2019 |
| | | JP | 2019142763 A | 29-08-2019 |
| | | JP | WO2018181389 A1 | 18-04-2019 |
| | | KR | 20190127929 A | 13-11-2019 |
| | | US | 2020017675 A1 | 16-01-2020 |
| | | WO | 2018181389 A1 | 04-10-2018 |
| US 2008268270 A1 | 30-10-2008 | AU | 2008247894 A1 | 13-11-2008 |
| | | BR | PI0810707 A2 | 21-10-2014 |
| | | CA | 2682963 A1 | 13-11-2008 |
| | | CN | 101678660 A | 24-03-2010 |
| | | EP | 2146848 A2 | 27-01-2010 |
| | | JP | 2010525967 A | 29-07-2010 |
| | | KR | 20100016323 A | 12-02-2010 |
| | | RU | 2009136519 A | 10-06-2011 |
| | | TW | 200906620 A | 16-02-2009 |
| | | US | 2008268270 A1 | 30-10-2008 |
| | | US | 2013075949 A1 | 28-03-2013 |
| | | US | 2016096347 A1 | 07-04-2016 |
| | | WO | 2008137367 A2 | 13-11-2008 |
| US 2023332020 A1 | 19-10-2023 | CN | 116209705 A | 02-06-2023 |
| | | EP | 3974181 A1 | 30-03-2022 |
| | | EP | 4204228 A1 | 05-07-2023 |
| | | JP | 2023543283 A | 13-10-2023 |
| | | KR | 20230082035 A | 08-06-2023 |
| | | US | 2023332020 A1 | 19-10-2023 |
| | | WO | 2022063962 A1 | 31-03-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150202846 A1

- EP 1235683 B1